# EUROPÄISCHE PATENTANMELDUNG

(11) **EP 0 901 268 A2**
(43) Veröffentlichungstag der Anmeldung: **10.03.1999**
(21) Anmeldenummer: 98115122.8
(22) Anmeldetag: 12.08.1998
(51) Int. Cl.: H04M 11/02

(54) **Anlage mit einer Türstation und mehreren Wohnungsstationen, die über eine Bus-Zweidrahtleitung miteinander verbunden sind**

(30) Priorität: 04.09.1997 DE 19738784
(71) Anmelder: Ritto - Werk Loh GmbH & Co. KG, 35708 Haiger (DE)
(72) Erfinder: Achenbach, Heinz, 35236 Breidenbach (DE); Heinbach, Hartmut, 57080 Siegen (DE); Braun, Wilfried, 35716 Dietzhölztal (DE); Heppner, Manfred, 35708 Haiger (DE)
(74) Vertreter: Fleck, Hermann-Josef, Dr.-Ing.

(57) **Zusammenfassung**

Die Erfindung betrifft eine Anlage mit einer Türstation, die mit Klingeltasten und einem Sprech-Hörkreis versehen ist, und mit mehreren, den Klingeltasten zugeordneten Wohnungsstationen, die von der Türstation gerufen und mit dieser für eine Sprechverbindung verbunden werden können, bei der von der Türstation eine Bus-Zweidrahtleitung zu allen Wohnungsstationen geführt ist, bei der in der Türstation mit den Klingeltasten und einem codierbaren Sender tasten- und damit wohnungsstationsindividuelle Rufsignale aussendbar sind, bei der alle Wohnungsstationen einen Sprechempfänger für die Rufsignale aufweisen, der nur bei dem Empfang des zugeordneten Rufsignals eine Sprechverbindung von der gerufenen Wohnungsstation herstellt, beim Empfang nicht zugeordneter Rufsignale dagegen die Herstellung einer Sprechverbindung zur Türstation sperrt. Mit der Sprach- und Signalübertragung auf die Bus-Zweidrahtleitung und einer getrennten Video-Zweidrahtbusleitung mit Anpassungsschaltungen wird bei minimalem Leitungs- und Steuerungsaufwand eine Anlage geschaffen, bei der sich Sprach- und Videosignale gegenseitig nicht beeinträchtigen können.

## Beschreibung

Die Erfindung betrifft eine Anlage mit einer Türstation, die mit Klingeltasten und einem Sprech-Hörkreis versehen ist, und mit mehreren, den Klingeltasten zugeordneten Wohnungsstationen, die von der Türstation gerufen und mit dieser für eine Sprechverbindung verbunden werden können, bei der von der Türstation eine Bus-Zweidrahtleitung zu allen Wohnungsstationen geführt ist, bei der in der Türstation mit den Klingeltasten und einem codierbaren Sender tasten- und damit wohnungsstationsindividuelle Rufsignale aussendbar sind, bei der alle Wohnungsstationen einen Sprechempfänger für die Rufsignale aufweisen, der nur bei dem Empfang des zugeordneten Rufsignals eine Sprechverbindung von der gerufenen Wohnungsstation herstellt, beim Empfang nicht zugeordneter Rufsignale dagegen die Herstellung einer Sprechverbindung zur Türstation sperrt.

Eine Anlage dieser Art ist aus der DE 29 46 177 C3 bekannt. Bei dieser bekannten Anlage werden die Rufsignale auf einer besonderen Steuerleitung übertragen, während die Sprechverbindung über eine ausgewählte Sprechleitung erfolgt. Die Steuerleitung und die Sprechleitung sind von der Türstation zu allen Wohnungsstationen geführt. Die über die Steuerleitung gerufene Wohnungsstation quittiert den Empfang des zugeordneten Rufsignals. Das Quittungssignal wird ebenfalls über die Steuerleitung übertragen und in den nicht gerufenen Wohnungsstationen als Belegzeichen für die ausgewählte Sprechleitung verwendet. Außerdem wird mit dem Quittungssignal in der Türstation die Anschaltung des Sprech-Hörkreises an die ausgewählte Sprechleitung vorgenommen. Von der Türstation und den Wohnungsstationen ist zudem eine getrennte Versorgungsleitung zu einem zentralen Netzgerät geführt.

Die bekannte Anlage ist im Leitungsaufwand nicht optimal reduziert, und außerdem ist der Verbindungsaufbau und- abbau zwischen der Türstation und einer gerufenen Wohnungsstation mit zusätzlichem Aufwand verbunden. Eine Videoverbindung zwischen der Türstation und der gerufenen Wohnungsstation ist bei dieser bekannten Anlage nicht vorgesehen.

Es ist Aufgabe der Erfindung, eine Anlage der eingangs erwähnten Art zu schaffen, die neben der Sprechverbindung auch eine Videoverbindung zwischen der Türstation und den Wohnungsstationen aufweist und dabei bei minimalem Leitungsaufwand eine gegenseitige Beeinträchtigung von Sprech- und Videoverbindung vermeidet, den Verbindungsaufbau und- abbau parallel vollzieht.

Diese Aufgabe wird nach der Erfindung dadurch gelöst, daß für eine Videoverbindung die Türstation mit einer Türstations-Kamera und die Wohnungsstationen mit jeweils einem Monitor versehen sind, daß die Türstations-Kamera über eine Koaxial-Zweidraht-Anpassungsschaltung an eine Video-Zweidrahtbusleitung angeschaltet ist, daß der Monitor der Wohnungsstationen über eine Zweidraht-Koaxial-Anpassungsschaltung an die ankommende Video-Zweidrahtbusleitung angeschaltet ist, daß die abgehende Video-Zweidrahtbusleitung der Wohnungsstation über eine Verteilerschaltung mit der ankommenden Video-Zweidrahtbusleitung verbunden ist, daß die Türstations-Kamera bei der Aussendung eines beliebigen Rufsignals auf der Bus-Zweidrahtleitung für die Sprechverbindung zumindest für eine vorgegebene Zeit oder bis zur Beendigung der hergestellten Sprechverbindung einschaltbar ist und daß in der gerufenen Wohnungsstation der Monitor über das empfangene Rufsignal oder ein zur Türstation gesendetes Quittungssignal eine vorgegebene Zeit oder bis zur Beendigung der hergestellten Sprechverbindung einschaltbar ist.

Auf diese Weise wird für die Sprechverbindung und die Videoverbindung je eine Zweidrahtbusleitung verwendet, so daß sich diese keinesfalls gegenseitig beeinflussen können. Die Rufsignale von der Türstation und/oder das Quittungssignal bzw. Endesignal der gerufenen Wohnungsstation werden parallel zum Aufbau und Abbau der Sprechverbindung zwischen der Türstation und der Wohnungsstation auch zum Aufbau und Abbau der Videoverbindung zwischen der Türstations-Kamera und dem Monitor der gerufenen Wohnungsstation verwendet. Dies bringt eine erhebliche Vereinfachung der Anlage und reduziert die Einschaltzeit für die Geräte der Videoverbindung auf das für den Betrieb der Anlage notwendige Mindestmaß.

Für die Bildung und Übertragung der Rufsignale ist nach einer Ausgestaltung vorgesehen, daß die Rufsignale in der Türstation über einen Türstations-Mikroprozessor in Abhängigkeit von der Ansteuerung über Ruffasten gebildet und auf einem Türstations-Bus zu einem Zentralgerät an die zu allen Wohnungsstationen führende Bus-Zweidrahtleitung weitergeleitet werden sowie daß in jeder Wohnungsstation an der Bus-Zweidrahtleitung für die Sprechverbindung ein Wohnungsstations-Mikroprozessor angeschaltet ist, der beim Empfang des zugeordneten Rufsignals über eine Steuerschaltung und ein Monitor-Netzgerät die Einschaltung des Monitors der gerufenen Wohnungsstation steuert.

Mit der Steuerschaltung der Wohnungsstation kann die Einschaltzeit für den Monitor vorgegeben werden.

Die Einschaltung des Monitors in der gerufenen Wohnungsstation kann nach einer weiteren Ausgestaltung auch so abgewandelt sein, daß die Steuerschaltung von einem Wohntelefonmodul beim Abheben und Auflegen eines Handapparates ansteuerbar ist und die Einschaltung des Monitors beim Auflegen des Handapparates beendet.

Ist nach einer Ausgestaltung vorgesehen, daß die Speisung der Türstations-Kamera und des Sprech-Hörkreises der Türstation über ein Netzgerät im Zentralgerät und die zur Türstation führende Türstations-Zweidrahtbusleitung erfolgt, dann braucht in der Türstation keine eigene Stromversorgung vorgesehen werden.

Die Einschaltung der Türstations-Kamera erfolgt nach einer Ausgestaltung über einen Kamera-Mikroprozessor, der bei jedem beliebigen, von dem Türstations-Mikroprozessor ausgesandten Rufsignal ansteuerbar ist.

Die Ansteuerung kann nach einer weiteren Ausgestaltung auch so abgewandelt sein, daß die Einschaltung der Türstations-Kamera über einen Zentral-Mikroprozessor erfolgt, der beim Abheben des Handapparates in der gerufenen Wohnungsstation ansteuerbar ist und eine Versorgungsspannung des zentralen Netzgerätes über die Türstations-Zweidrahtbusleitung und die Koaxial-Zweidraht-Anpassungsschaltung oder den Kamera-Mikroprozessor zur Türstations-Kamera weiterleitet.

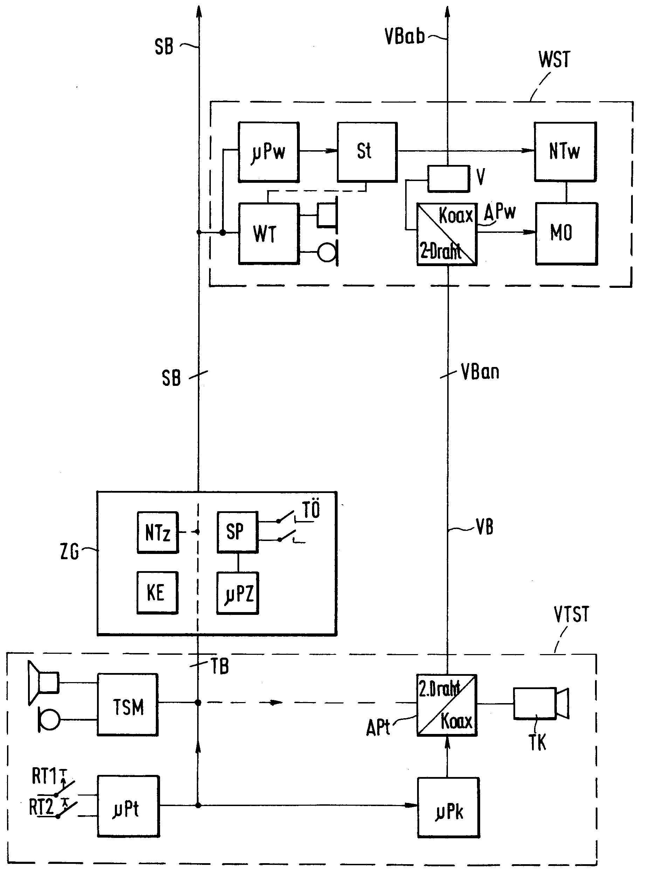

Die Erfindung wird anhand eines in der Zeichnung als Blockschaltbild dargestellten Ausführungsbeispiels näher erläutert.

Die Anlage umfaßt drei verschiedene Baugruppen, zum einen eine Türstation VTST, ein Zentralgerät ZG und mehrere Wohnungsstationen WST. Wie die Zeichnung zeigt, umfaßt die Leitungsführung eine Bus-Zweidrahtleitung SB, die vom Zentralgerät ZG zu allen Wohnungsstationen WST geführt ist und für die Sprechverbindung sowie die Übertragung der Rufsignale, Quittungssignale und dgl. verwendet wird. Vom Zentralgerät ZG führt eine Türstations-Zweidraht-busleitung TB zur Türstation VTST. Außerdem ist von der Türstation VTST zu allen Wohnungsstationen eine Video-Zweidrahtbusleitung VB geführt, an die in der Türstation VTST über eine Koaxial-Zweidraht-Anpassungsschaltung APt eine Türkamera TK angeschaltet ist. In jeder Wohnungsstation WST ist die ankommende Video-Zweidrahtbusleitung VBan über eine Zweidraht-Koaxial-Anpassungsschaltung APw mit einem Monitor MO verbunden. Außerdem wird die ankommende Video-Zweidrahtbusleitung VBan über eine Verstärkerschaltung V als abgehende Video-Zweidrahtbusleitung VBab zur nächsten Wohnungsstation WST weitergeführt.

Das Zentralgerät ZG enthält ein zentrales Netzgerät NTz, eine Steuerplatine SP, eine Koppeleinrichtung KE zwischen der Bus-Zweidrahtleitung SB und der Türstations-Zweidrahtbusleitung TB und einen zentralen Mikroprozessor µPz.

Die für eine Video- und Sprechübertragung ausgelegte Türstation VTST enthält ein Türsprechmodul TSM mit Mikrophon und Lautsprecher, einen Türstations-Mikroprozessor µPt, einen Kamera-Mikroprozessor µPk, die Koaxial-Zweidraht-Anpassungsschaltung APt und die Türstations-Kamera TK.

In jeder Wohnungsstation WST ist an die Bus-Zweidrahtleitung SB ein Wohnungsstations-Mikroprozessor µPw und ein Wohntelefonmodul WT angeschaltet bzw. anschaltbar. Der Wohnungsstations-Mikroprozessor µPw nimmt die vom Türstations-Mikroprozessor µPt ausgesandten Rufsignale auf und wertet diese aus. Der Türstations-Mikroprozessor µPt wird über Ruftasten RT1, RT2 angesteuert und gibt den Wohnungsstationen WST zugeordnete Rufsignale ab, die über die Türstations-Zweidrahtbusleitung TB, die Koppeleinrichtung KE und die Bus-Zweidrahtleitung SB an alle parallelgeschalteten Wohnungsstationen WST und damit alle Wohnungsstations-Mikroprozessoren µPw gelangen. Der Wohnungsstations-Mikroprozessor µPW der gerufenen Wohnungsstation WST erkennt den Anruf und löst in bekannter Weise ein akustisches Rufsignal aus. Gleichzeitig steuert er die Steuerschaltung St der gerufenen Wohnungstation WST an und leitet über das Netzgerät NTw die Speisung des Monitors MO ein, und zwar für eine vorgegebene Zeit. Meldet sich der Teilnehmer durch Abheben des Handgerätes, der z.B. die Sprech- und Hörkapsel für das Wohntelefonmodul WT enthält, dann kann die Sprechverbindung zur Türstation VTST von der gerufenen Wohnungsstation WST zur Türstation VTST hergestellt werden. In den nicht gerufenen Wohnungsstationen WST wird keine Einschaltung des Monitors MO und keine Anschaltung des Wohntelefonmoduls WT bewirkt, da diese Wohnungsstations-Mikroprozessoren µPw erkennen, daß diese Wohnungsstationen WST nicht gerufen werden. Das Rufsignal kann in diesen Wohnungsstationen WST auch als Sperrsignal verwendet werden, um ein Aufschalten auf die Sprechverbindung sicher zu unterbinden. Außerdem kann von dem Wohnungsstations-Mikroprozessor µPw der gerufenen Wohnungsstation WST auch ein Quittungssignal zur Türstation VTST übertragen werden, mit dem der Türsprechmodul TSM aktiviert oder an die Türstations-Zweidrahtbusleitung TB angeschaltet wird. Das Quittungssignal kann auch zur Einschaltung der Türstations-Kamera TK verwendet werden. Anstelle des Quittungssignals für den Empfang des Rufsignals kann in der gerufenen Wohnungsstation WST beim Melden des Teilnehmers, z. B. durch Abheben des Handapparates, ein Meldesignal zur Türstation VTST gesandt werden, das die Schaltfunktionen des Quittungssignals in der gerufenen Wohnungsstation WST und der Türstation VTST übernimmt. Das Auflegen des Handapparates in der gerufenen Wohnungsstation WST wird zur Beendigung der Sprech- und Videoverbindung ausgenützt, wobei insbesondere auch die Türstations-Kamera TK und der Monitor MO der gerufenen Wohnungsstation WST abgeschaltet, d.h. nicht mehr gespeist werden. In diesem Fall ist die Videoverbindung solange geschaltet, wie die Sprechverbindung aufrechterhalten wird.

Der Koaxial-Zweidraht-Anpassungsschaltung APt in der Türstation VTST und der Türstations-Kamera TK kann auch ein zusätzlicher Kamera-Mikroprozessor µPk zugeordnet sein, der von dem Türstations-Mikroprozessor µPt bei der Aussendung jeden beliebigen Rufsignals ansteuerbar ist. Über den Kamera-Mikroprozessor µPk kann dann die Einschaltung der Türstations-Kamera TK eingeleitet werden, wobei die Speisespannung durchaus vom zentralen Netzgerät NTz des Zentralgerätes ZG über die Türstations-Zweidrahtbusleitung TB zur Türstations-Kamera TK zugeführt wird.

Wie mit TÖ an der Steuerplatine SP des Zentralgerätes ZG angedeutet, können über die Türstations-Zweidrahtbusleitung TB auch Türöffner im Bereich der Türstation VTST betätigt werden.

Mit der neuen Anlage sind die Videosignale von den Sprach- und SteuersignaIen getrennt und können von diesen nicht beeinträchtigt werden. Die Anlage hat demnach einen minimalen Leitungs- und Steuerungsaufwand.

## Patentansprüche

1. Anlage mit einer Türstation, die mit Klingeltasten und einem Sprech-Hörkreis versehen ist, und mit mehreren, den Klingeltasten zugeordneten Wohnungsstationen, die von der Türstation gerufen und mit dieser für eine Sprechverbindung verbunden werden können, bei der von der Türstation eine Bus-Zweidrahtleitung zu allen Wohnungsstationen geführt ist, bei der in der Türstation mit den Klingeltasten und einem codierbaren Sender tasten- und damit wohnungsstationsindividuelle Rufsignale aussendbar sind, bei der alle Wohnungsstationen einen Sprechempfänger für die Rufsignale aufweisen, der nur bei dem Empfang des zugeordneten Rufsignals eine Sprechverbindung von der gerufenen Wohnungsstation herstellt, beim Empfang nicht zugeordneter Rufsignale dagegen die Herstellung einer Sprechverbindung zur Türstation sperrt,
dadurch gekennzeichnet,
daß für eine Videoverbindung die Türstation (VTST) mit einer Türstations-Kamera (TK) und die Wohnungsstationen (WST) mit jeweils einem Monitor (MO) versehen sind,
daß die Türstations-Kamera (TK) über eine Koaxial-Zweidraht-Anpassungsschaltung (APt) an eine Video-Zweidrahtbusleitung (VB) angeschaltet ist,
daß der Monitor (MO) der Wohnungsstationen (WST) über eine Zweidraht-Koaxial-Anpassungsschaltung (APw) an die ankommende Video-Zweidrahtbusleitung (VBanc) angeschaltet ist,
daß die abgehende Video-Zweidrahtbusleitung (VBab) der Wohnungsstation (WST) über eine Verteilerschaltung (V) mit der ankommenden Video-Zweidrahtbusleitung (VBan) verbunden ist,
daß die Türstations-Kamera (TK) bei der Aussendung eines beliebigen Rufsignals auf der Bus-Zweidrahtleitung (SB) für die Sprechverbindung zumindest für eine vorgegebene Zeit oder bis zur Beendigung der hergestellten Sprechverbindung einschaltbar ist und
daß in der gerufenen Wohnungsstation (WST) der Monitor (MO) über das empfangene Rufsignal oder ein zur Türstation (VST) gesendetes Quittungssignal eine vorgegebene Zeit oder bis zur Beendigung der hergestellten Sprechverbindung einschaltbar ist.

2. Anlage nach Anspruch 1,
dadurch gekennzeichnet,
daß die Rufsignale in der Türstation (VTST) über einen Türstations-Mikroprozessor (µPt) in Abhängigkeit von der Ansteuerung über Ruftasten (RT1, RT2) gebildet und auf einem Türstations-Bus (TB) zu einem Zentralgerät (ZG) an die zu allen Wohnungsstationen (WST) führende Bus-Zweidrahtleitung (SB) weitergeleitet werden.

3. Anlage nach Anspruch 1 oder 2,
dadurch gekennzeichnet,
daß in jeder Wohnungsstation (WST) an der Bus-Zweidrahtleitung (SB) für die Sprechverbindung ein Wohnungsstations-Mikroprozessor (µPw) angeschaltet ist, der beim Empfang des zugeordneten Rufsignals über eine Steuerschaltung (ST) und ein Monitor-Netzgerät (NTw) die Einschaltung des Monitors (MO) der gerufenen Wohnungsstation (WST) steuert.

4. Anlage nach Anspruch 3,
dadurch gekennzeichnet,
daß die Steuerschaltung (St) die Einschaltzeit für den Monitor (MO) vorgibt.

5. Anlage nach Anspruch 3,
dadurch gekennzeichnet,
daß die Steuerschaltung (ST) von einem Wohntelefonmodul (WT) beim Abheben und Auflegen eines Handapparates ansteuerbar ist und die Einschaltung des Monitors (MO) beim Auflegen des Handapparates beendet.

6. Anlage nach einem der Ansprüche 1 bis 5,
dadurch gekennzeichnet,
daß die Speisung der Türstations-Kamera (TK) und des Sprech-Hörbereichs (TSM) der Türstation (VTST) über ein Netzgerät (NTz) im Zentralgerät (ZG) und die zur Türstation (VTST) führende Türstations-Zweidrahtbusleitung (TB) erfolgt.

7. Anlage nach Anspruch 6,
dadurch gekennzeichnet,
daß die Einschaltung der Türstations-Kamera (TK) über einen Kamera-Mikroprozessor (µPk) erfolgt, der bei jedem beliebigen, ausgesandten von Rufsignal Türstations-Mikroprozessor µPz ansteuerbar ist.

8. Anlage nach Anspruch 6,
dadurch gekennzeichnet,
daß die Einschaltung der Türstations-Kamera (TK) über einen Zentral-Mikroprozessor (µPz) erfolgt, der beim Abheben des Handapparates in der gerufenen Wohnungsstation (WST) ansteuerbar ist und eine Versorgungsspannung des zentralen Netzgerätes (NTz) über die Türstations-Zweidrahtbusleitung (TB) und die Koaxial-Zweidraht-Anpassungsschaltung (APt) oder den Kamera-Mikroprozessor (µPk) zur Türstations-Kamera (TK) weiterleitet.
